# EUROPÄISCHE PATENTSCHRIFT

(11) **EP 2 864 107 B1**
(45) Veröffentlichungstag und Bekanntmachung des Hinweises auf die Patenterteilung: **24.08.2016**
(21) Anmeldenummer: 13723659.2
(22) Anmeldetag: 17.04.2013
(51) Int. Cl.: B29C 67/00, B22F 3/105

(54) **VORRICHTUNG ZUM AUFBAUEN EINES SCHICHTENKÖRPERS MIT ENTLANG DES AUSTRAGBEHÄLTERS BEWEGBAREM VORRATS- ODER BEFÜLLBEHÄLTER**
DEVICE FOR BUILDING A MULTILAYER STRUCTURE WITH STORAGE CONTAINER OR FILLING CONTAINER MOVABLE ALONG THE DISPENSING CONTAINER
DISPOSITIF DE FABRICATION D'UN CORPS STRATIFIÉ COMPRENANT UN RÉSERVOIR DE STOCKAGE OU DE REMPLISSAGE MOBILE LE LONG DU RÉSERVOIR DE DISTRIBUTION

(30) Priorität: 22.06.2012 DE 102012012363
(43) Veröffentlichungstag der Anmeldung: 29.04.2015
(73) Patentinhaber: Voxeljet AG, 86316 Friedberg (DE)
(72) Erfinder: HARTMANN, Andreas, 86391 Stadtbergen (DE); SCHMID, Dominik, 86165 Augsburg (DE)
(74) Vertreter: Wiedemann, Markus
(86) Internationale Anmeldenummer: PCT/DE2013/000198
(87) Internationale Veröffentlichungsnummer: WO 2013/189473

(56) Entgegenhaltungen:
- WO-A1-2010/149133
- DE-A1-102009 056 696
- DE-U1- 20 122 639

## Beschreibung

### Stand der Technik

Die Erfindung betrifft eine Vorrichtung zum Aufbauen eines Schichtenkörpers aus einer Mehrzahl von auf einer Bauplattform innerhalb eines Baufelds übereinanderliegenden Schichten aus fließfähigem Material, besondere aus Partikelmaterial, gemäß dem Oberbegriff von Patentanspruch 1.

Eine gattungsgemäße Vorrichtung ist aus DE 10 2009 056696 A1 bekannt.

In der EP 0 431 924 B1 wird ein computergesteuertes Verfahren zur Herstellung dreidimensionaler Formkörpers beschrieben. Dabei wird fleißfähiges Partikelmaterial in einer dünnen Schicht auf ein von Behälterwänden umfasstes und auf einer Bauplattform angeordnetes Baufeld aufgetragen und dieses anschließend gemäß Computerdaten selektiv mittels eines Druckkopfes mit einem Bindemittel bedruckt. Der mit dem Bindemittel bedruckte Partikelbereich verklebt und verfestigt sich unter dem Einfluss des Binders und gegebenenfalls eines zusätzlichen Härters. Anschließend wir die Bauplattform um eine Schichtdicke in einen Bauzylinder abgesenkt und mit einer neuen Schicht Partikelmaterial versehen, die ebenfalls, wie oben beschrieben, bedruckt wird. Diese Schritte werden wiederholt bis die erwünschte Höhe des Formkörpers erreicht ist. Aus den bedruckten und verfestigten Bereichen entsteht so ein dreidimensionales Objekt.

Der aus verfestigtem Partikelmaterial hergestellte Formkörper ist nach seiner Fertigstellung in losem Partikelmaterial eingebettet und wird anschließend davon befreit. Dies erfolgt beispielsweise mittels eines Saugers. Danach bleibt der gewünschte Formkörper übrig, die von anhaftenden Restpartikeln beispielsweise durch Abbürsten befreit wird. In identischer bzw. ähnlicher Weise arbeiten auch andere Pulvergestützte Rapid-Prototyping-Prozesse, wie z.B. selektives Lasersintern oder Elektron-Beam-Schmelzen, bei denen ebenso loses Partikelmaterial schichtweise ausgebracht und mit Hilfe einer gesteuerten physikalischen Strahlungsquelle selektiv verfestigt wird. Die oben genannten Verfahren werden unter den Begriffen "additive Fertigungsverfahren", dreidimensionale, Druckverfahren" oder "3D-Druckverfahren" zusammengefasst.

In der EP 1 872 928 A1 wird vorgeschlagen, zum Bauen größerer dreidimensionaler Formkörper mit fortschreitendem Schichtauftrag nicht die Bauptattform relativ zum Austragbehälter und zum Druckkopf abzusenken, sondern stattdessen den Austragbehälter und den Druckkopf relativ zur Bauplattform anzuheben. Hierzu wird der Austragbehälter als Dosiervorrichtung ausgestaltet, der zur gesteuerten Ausgabe eines vorbestimmten, vorzugsweise konstanten linienförmigen Volumenstroms von Partikelmaterial pro Längeneinheit und pro Zeiteinheit gesteuert ein- und ausschaltbar ist, um nicht unnötig Partikelmaterial um den zu bauenden Formkörper herum abzuwerfen bzw. vorzeitig "leer" zu laufen und damit während der Schichtablage ihre Funktion zu verlieren. Solche dosiergesteuerten und "intelligenten" Austragbehälter sind jedoch relativ aufwändig in ihrem Aufbau und entsprechend teuer.

Einfacher gestaltete "unintelligente" Austragbehälter können dagegen nicht gezielt Partikelmaterial dosieren bzw. sind nicht schaltbar. Sie beinhalten beispielsweise ein in Austragrichtung bewegtes Rakel oder eine gegenläufig rotierende Walze oder eine schwingende Klinge. Diese Vorrichtungen verteilen dann eine vor dem Austragbehälter befindliche Materialmenge in Austragrichtung auf dem Baufeld. Die Menge an Partikelmaterial muss dann vor der Fahrt des Austragbehälters über das Baufeld ausreichend bemessen werden.

Damit der Prozess wie beschrieben ablaufen kann, muss der zu beschichtende Bereich bzw. das Baufeld vom Austragbehälter vollständig überstrichen werden können. Die Länge des Austragbehälters entspricht daher der Länge des Baufelds. Unter "Länge des Austragbehälters" soll im Folgenden die größte Dimension bzw. die größte Erstreckung des Austragbehälters verstanden werden.

Austragbehälter sind deshalb üblicherweise als länglicher Balken mit trichterförmigem Querschnitt ausgebildet und mit einem Schlitz an der Unterseite als Austragsöffnung zur Abgabe von Partikelmaterial. Die Längserstreckung des Austragbehälters ist dann senkrecht zu seiner Austragrichtung. Der Vorrats- oder Befüllbehälter hat dann die Aufgabe, den Austragbehälter über seine gesamte Länge verlustfrei und gleichmäßig auf ein gewünschtes Befüllniveau mit dem fließfähigen Material zu befüllen.

In der WO 2010/149133 A1 wird ein balkenförmiger Vorrats- oder Befüllbehälter mit in einer Ebene senkrecht zur Längsrichtung gesehen trichterförmigem Querschnitt beschrieben, welcher die gleiche Länge wie der zu befüllende Austragbehälter aufweist. Der Austragbehälter, unterfährt dann zu seiner Befüllung den Vorrats- oder Befüllbehälter an einem Ende des Baufelds. Die Entleerung des Vorrats- oder Befüllbehälters in den Austragbehälter erfolgt über einen Schieberverschluss der mit einem Gitter versehenen Abfließöffnung an seiner Unterseite. Da sich der Schieberverschluss über die gesamte Länge des Vorrats- oder Befüllbehälters erstreckt, baut er lang und schmal. Das begünstigt ein Verklemmen des Schieberverschlusses. Außerdem muss zum Bewegen des Schieberverschlusses relativ viel Energie aufgewendet werden.

In der WO 2005/097476 A1 erfolgt die Befüllung des Austragbehälters über Düsen, welche entlang dem Austragbehälter verfahren werden. Die Düsen sind über flexible Schläuche mit einem Vorratstank verbunden. Der Transport des Pulvers von Tank zur Düse erfolgt über eine Pumpe. Um die Schläuche ohne Knick bewegen zu können, muss die Bauvorrichtung eine bestimmte Höhe aufweisen, was die Bauvorrichtung jedoch groß bauen lässt. Weiterhin ist der Pulvertransport in Schläuchen wegen hoher Innenreibung und Siphoneffekten negativ zu bewerten. Wenn für eine bessere Beweglichkeit der Schläuche gerippte Schläuche eingesetzt werden, ist mit einer hohen Verschmutzung zu rechnen. Wenn feuchtes, zum Anhaften neigendes Pulvermaterial eingesetzt wird, dann gestaltet sich eine Reinigung der Schläuche sehr kompliziert. Darüber hinaus entstehen beim Bewegen der Schläuche Pumpeffekte, die das Pulvermaterial verdichten können, wodurch sich wiederum die Reibung erhöht und der Transport verschlechtert wird. Weiterhin können unerwünschte Klumpen entstehen. Zudem ist die Förderstrecke vom Vorratstank zu den Düsen relativ lang und das Pulver liegt an den Innenwandungen der Schläuche an, wodurch sich die physikalischen Eigenschaften des Pulvers ändern können. Nicht zuletzt, muss, um ein Überfüllen des Austragbehälters zu vermeiden, entweder die Pumpe den Pulverfluss regeln oder das Verhältnis von Pulverfluss zur Verfahrgeschwindigkeit der Düsen geregelt sein. Beides bedeutet jedoch einen hohen steuerungstechnischen Aufwand mit zusätzlicher Sensorik.

Die Aufgabe der Erfindung besteht demgegenüber darin, eine Vorrichtung der eingangs erwähnten Art derart weiter zu bilden, dass sie bei einfacher und kostengünstiger Ausführung eine variable und zuverlässige Befüllung des Austragbehälters ermöglicht.

### Offenbarung der Erfindung

Die Erfindung geht davon aus, dass in Längsrichtung des Austragbehälters gesehen der Vorrats- oder Befüllbehälter eine geringere Erstreckung als der Austragbehälter aufweist.

Gemäß der Erfindung ist dann vorgesehen, dass der Vorrats- oder Befüllbehälter in Längsrichtung des Austragbehälters gesehen relativ zum Austragbehälter derart steuerbar ist, dass die Abfließöffnung, des Vorrats- oder Befüllbehälters entlang der Zuführöffnung, wenigstens. einmal von deren einem Ende bis zu deren anderem Ende geführt wird.

Wie oben bereits erwähnt, soll unter der "Länge", bzw. "Längserstreckung" des Austragbehälters - die -größte Dimension des Austragbehälters verstanden werden. Diese Längsrichtung ist in der Regel senkrecht zur Austragrichtung des Austragbehälters.

Mit anderen Worten wird gemäß der Erfindung das fließfähige Material in dem Vorrats- und Zuführbehälter als kompakte, Schüttung transportiert und ausgetragen. Dadurch wird das fließfähige Material kaum durchmischt bzw. umgewälzt, so dass negative Einflüsse auf das fließfähige Material z.B. durch elektrostatische Aufladung, Aufnahme oder Abgabe von Feuchtigkeit oder Oxidieren kaum stattfinden. Als Schüttung in dem relativ kurz und genauer kürzer als der Austragbehälter bauenden Vorrats- und Zuführbehälter bietet das fließfähige Material der Umgebung nur eine geringe Oberfläche, so dass die physikalischen Eigenschaften des fließfähigen Materials durch z.B. Verdampfen einer Komponente oder Abkühlen kaum verändern werden.

Mithin wird mit der Erfindung eine Linearbefüllung des Austragbehälters verwirklicht, welche den Austragbehälter entlang seiner Längserstreckung variabel befüllen kann. Dann kann beim kastenlosen Bauen, d.h. beim Bauen ohne Bauwände die Baufeldgröße stufenlos variiert werden. Bei von bestimmten Seiten her schwierig zugängigen Bauvorrichtungen bringt die Erfindung den Vorteil mit sich, dass der Vorrats- und Zuführbehälter dann in eine Position verfahren werden kann, die hinsichtlich seiner Zugängigkeit günstiger ist, um ihn zu befüllen oder zu reinigen.

Insgesamt kann dadurch der verfahrbare Vorrats- oder Befüllbehälter einfach gereinigt und der Austragbehälter von dem Vorrats- und Zuführbehälter bis zu einem einheitlichen Niveau unabhängig vom gerade vorliegenden Füllstand auf einfache Weise befüllt werden.

Durch die in den Unteransprüchen aufgeführten Maßnahmen sind vorteilhafte Weiterbildungen und Verbesserungen der in den unabhängigen Ansprüchen angegebenen Erfindung möglich.

Besonders bevorzugt ist der Vorrats- oder Befüllbehälter entlang einer sich zwischen einer Ausgangsposition an dem einem Ende der Zuführöffnung des Austragbehälters und einer Reversierposition am dem anderen Ende der Zuführöffnung des Austragbehälters erstreckenden Austragstrecke zwangsgesteuert. Damit wird das gesamte zur Verfügung stehende Befüllvolumen des Austragbehälters vom Vorrats- und Zuführbehälter erfasst.

Bevorzugt ist die Ausgangsposition des Vorrats- oder Befüllbehälters eine Befüllposition, an welcher der Vorrats- oder Befüllbehälter mittels einer Befüllvorrichtung mit fließfähigem Material befüll- oder nachfüllbar ist.

Gemäß einer Weiterbildung kann die wenigstens eine Abfließöffnung des Vorrats- oder Befüllbehälters auf einem Niveau angeordnet sein, welches im Wesentlichen auf einem für das fließfähige Material in dem Austragbehälter zu erzielenden Füllniveau liegt, um an der aktuellen Position der wenigstens einen Abfließöffnung an der Austragstrecke diese wenigstens eine Abfließöffnung bei Erreichen des zu erzielenden Füllniveaus durch das bereits im Rahmen eines bereits zurückgelegten Abschnitts der Austragstrecke in den Austragbehälter eingebrachte fließfähige Material zu verschließen. Damit wird eine sog. "Schüttkegeldichtung" realisiert, bei welcher der Schüttkegel des bereits in den Austragbehälter ausgebrachten fließfähigen Materials durch Rückstau ein weiteres Abfließen an der bisherigen Position der Austragstrecke verhindert und erst bei Weiterfahrt des Vorrats- und Zuführbehälters weiteres fließfähiges Material ausfließen kann, bis wiederum der Schüttkegel an dieser dann erreichten Position das Abfließen behindert. Auf diese Weise ist keine Dosiervorrichtung an dem Vorrats- und Zuführbehälter notwendig, weil stets ein gewünschtes Füllniveau erreicht wird. Die dafür geeignete Geschwindigkeit des Vorrats- und Zuführbehälters relativ zum Austragbehälter kann der Fachmann durch Versuche bzw. Berechnung leicht herausfinden.

Um Verlust von fließfähigem Material zu vermeiden, wenn der Vorrats-oder Befüllbehälter die Reversierposition erreicht bzw. geringfügig überschritten hat, und dann die Gefahr besteht, dass sich die wenigstens eine Abfließöffnung des Vorrats- und Zuführbehälters nicht mehr (vollständig) über der Zuführöffnung des Austragbehälters befindet, kann im Bereich der Reversierposition des Vorrats- oder Befüllbehälters ein Verschlusskörper derart angeordnet sein, dass bei Positionierung der wenigstens einen Abfließöffnung des Vorrats- oder Befüllbehälters über dem Verschlusskörper der Verschlusskörper die Abfließöffnung verschließt.

Besonders bevorzugt ist der gegenüber dem Austragbehälter verfahrbare Vorrats- oder Befüllbehälter derart befüllbar, dimensioniert und/oder gesteuert, dass der Austragbehälter aufgrund einer einzigen Hinfahrt des Vorrats- oder Befüllbehälters von der Ausgangsposition bis zur Reversierposition, aufgrund einer einzigen Hin- und Rückfahrt des Vorrats- oder Befüllbehälter von der Ausgangsposition bis zur Reversierposition und zurück oder aufgrund mehrerer Fahrten entlang der Austragstrecke bis auf ein zu erzielendes Füllniveau befüllbar ist.

Bevorzugt erstreckt sich die Zuführöffnung des Austragbehälters im Wesentlichen über die gesamte Länge des Austragbehälters, wenn man die Seitenwände des Austragbehälters entsprechend ausführt.

Gemäß einer Variante ist in Austragrichtung oder in Längsrichtung des Austragbehälters gesehen der Vorrats- oder Befüllbehälter stationär angeordnet und der Austragbehälter unter den Vorrats- oder Befüllbehälter verfahrbar.

Gemäß einer weiteren Variante ist in Austragrichtung oder in Längsrichtung des Austragbehälters gesehen der Vorrats- oder Befüllbehälter zusammen mit dem Austragbehälter verfahrbar. In diesem Fall kann der Vorrats- oder Befüllbehälter in vertikaler Richtung gesehen relativ zum Austragbehälter derart positioniert sein, dass das Niveau der Abfließöffnung des Vorrats- oder Befüllbehälters unterhalb des Niveaus eines oberen Randes der Zuführöffnung des Austragbehälters angeordnet ist. Dann wird ein Abfließen von Schüttmaterial nach außerhalb des Auftragbehälters auf dessen Rand wirksam verhindert.

Gemäß einer Weiterbildung kann der Vorrats- oder Befüllbehälter einen trichterförmigen Querschnitt aufweisen, wobei die Abfließöffnung trichterendseitig angeordnet ist. Besonders bevorzugt ist der Querschnitt des Vorrats- und Zuführbehälters sowohl in einer Ebene senkrecht zur Längserstreckung des Auftragbehälters als auch in einer Ebene, welche die Längsachse des Auftragbehälters enthält und vertikal ausgerichtet ist trichterförmig ausgebildet. Weiterhin kann der Querschnitt des Vorrats- oder Befüllbehälters in einer horizontalen Ebene quadratisch oder rechteckförmig ausgebildet sein, wobei bei rechteckförmigem Querschnitt die längere Seite parallel zum Austragbehälter angeordnet, aber eben kürzer als dieser ausgebildet ist.

Das Abfließen von fließfähigem Material aus dem Vorrats- oder Befüllbehälter in den Austragbehälter kann bevorzugt durch wenigstens eine der folgenden Einrichtungen, einzeln oder in Kombination miteinander erfolgen:
- Eine Einrichtung zum Erzeugen von Druck und/oder Schwingungen in dem im Vorrats- oder Befüllbehälter bevorrateten fließfähigen Material, um durch Einbringen von Druck und/oder Schwingungen das fließfähige Material von einem nicht fließenden Zustand in einen fließenden Zustand zu bringen, in welchem es durch die wenigstens eine Abfließöffnung abfließen kann,
- eine Einrichtung zum wahlweisen Öffnen oder Verschließen der wenigstens einen Abfließöffnung des Vorrats- oder Befüllbehälters,
- eine Einrichtung zum Aktivieren und Deaktivieren eines auf das in dem in dem Vorrats- oder Befüllbehälter bevorratete fließfähige Material wirkenden Sogs, derart, dass
   o bei aktiviertem Sog das fließfähige Material einerseits durch eine sieb- oder gewebeartige Struktur einerseits am Abfließen in Richtung des Sogs und andererseits auch am
   Abfließen durch die wenigstens eine Abfließöffnung gehindert ist,
   o bei deaktiviertem Sog das in dem Vorrats- oder Befüllbehälter bevorratete fließfähige Material durch die wenigstens eine Abfließöffnung abfließt,
- eine Zellradschleuseneinrichtung.

Der Vorrats- oder Befüllbehälter ist bevorzugt relativ zum Austragbehälter entlang einer Linearführung geführt und durch Antriebsmittel wie ein rotatorischer Antriebsmotor (z.B. Elektromotor) kombiniert mit einem Getriebe wie Mutter-Spindeltrieb, Zahnriemengetriebe, Seilzuggetriebe angetrieben. Alternativ könnte der Vorrats- oder Befüllbehälter auch von einem Zylinder-Kolbentrieb wie. einem Pneumatikzylinder linear und direkt angetrieben werden. Die Steuerung der Antriebsmittel des verfahrbaren Vorrats- und Zuführbehälters erfolgt beispielsweise durch ein elektronisches Steuergerät.

Die Austragöffnung bzw. die Unterseite des Austragbehälters muss von Zeit zu Zeit von Anhaftungen von fließfähigem Material befreit werden. Dazu sind bei Bauvorrichtungen des Stands der Technik separate Reinigungsvorrichtungen vorgesehen, beispielsweise in Form von Bürsten, Schwämmen, Klingen, Filzstreifen oder rotierenden Bürstenwalzen, Filzlammelenwalzen oder Schwammwalzen, welche an einer eigenen Linearführung geführt, entlang des Auftragbehälters verfahrbar angeordnet sind.

In vorteilhafter Weise ist an dem gegenüber dem Austragbehälter verfahrbaren Vorrats- oder Befüllbehälter eine Reinigungsvorrichtung für die Unterseite bzw. für die Austragöffnung des Austragbehälters befestigt. Dann verfährt die Reinigungsvorrichtung zusammen mit dem Vorrats- und Zuführbehälter als Baueinheit und es muss keine eigene Linearführung für die Reinigungsvorrichtung mehr vorgesehen werden. Weitere die Erfindung verbessernde Maßnahmen werden nachstehend gemeinsam mit der Beschreibung eines Ausführungsbeispiels der Erfindung anhand der Zeichnung näher dargestellt.

### Zeichnung

Nachstehend sind Ausführungsbeispiele der Erfindung in der Zeichnung dargestellt und in der nachfolgenden Beschreibung näher erläutert. In der Zeichnung zeigt
- Fig.1a: eine perspektivische Ansicht auf eine bevorzugte Ausführungsform einer Vorrichtung zur Herstellung von Formkörpern auf einer Bauplattform während einer Baüphase oder Beschichtungsphase;
- Fig.1b: eine perspektivische Ansicht der Vorrichtung von Fig.1 während einer Befüllphase des Austragbehälters, wobei ein Vorrats- oder Befüllbehälter entlang einer Austragstrecke verfahren wird;
- Fig.1c: eine perspektivische Ansicht der Vorrichtung von Fig.1. während einer Befüllphase des Austragbehälters, wobei sich der Vorrats- oder Befüllbehälter an einer Reversierposition der Austragstrecke befindet;
- Fig.2a: eine Querschnittsdarstellung der Vorrichtung in der Position von Fig.1b;
- Fig.2b: eine Querschnittsdarstellung der Vorrichtung entlang der Linie A-A von Fig.2b;
- Fig.3: eine perspektivische Darstellung einer weiteren Ausführungsform der Vorrichtung gemäß der Erfindung.

### Beschreibung der Ausführungsbeispiele

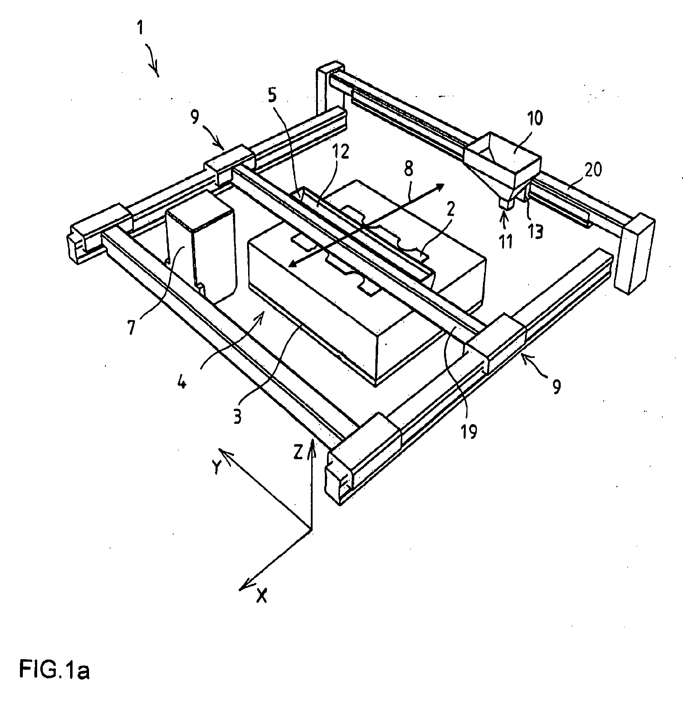

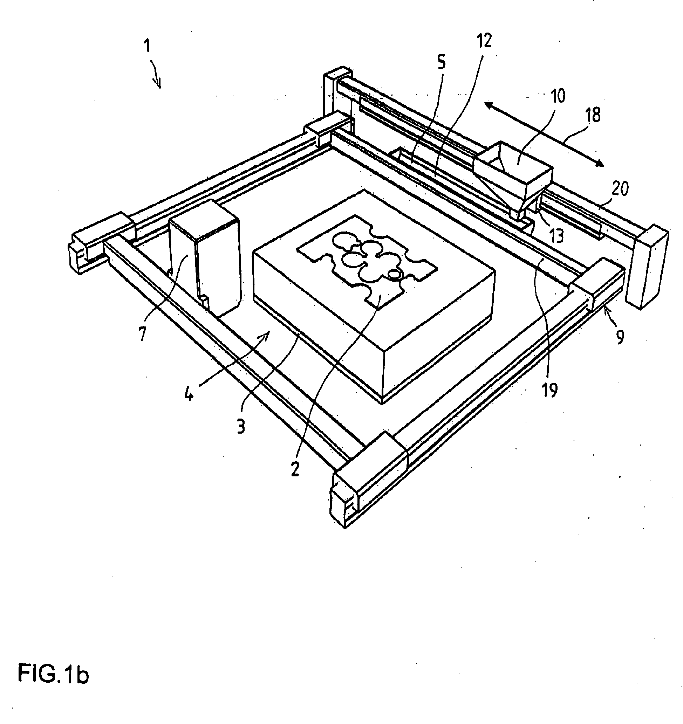

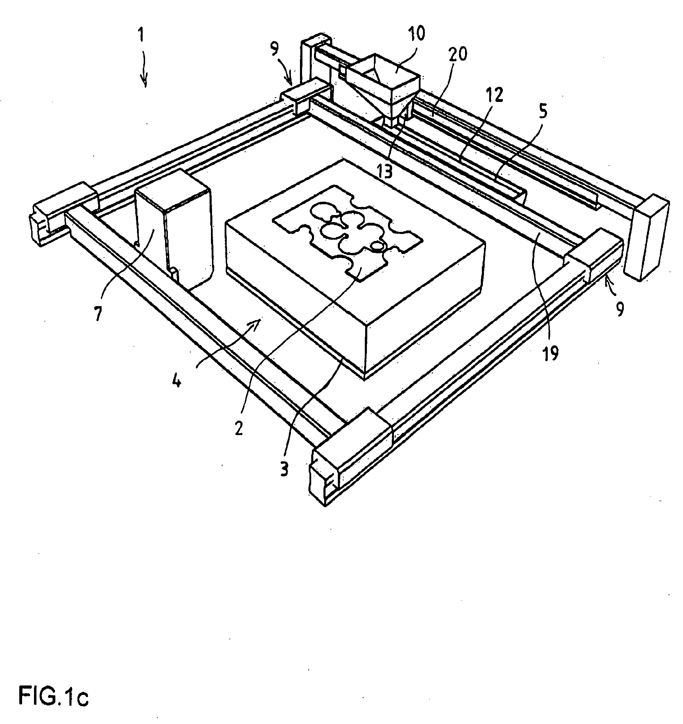

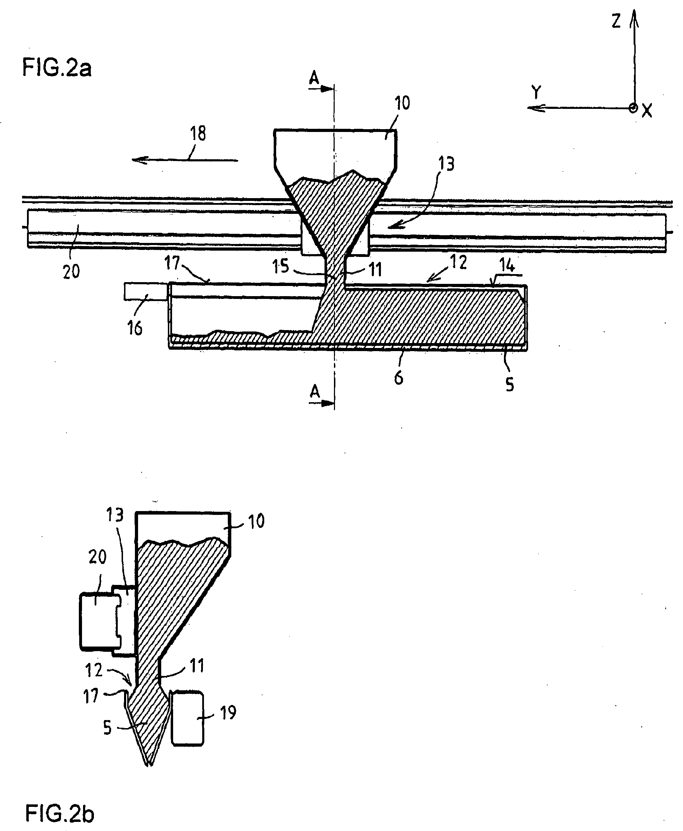

Eine bevorzugte Ausführungsform einer Vorrichtung 1 zum Aufbauen eines Schichten- oder Formkörpers 2 aus einer Mehrzahl von auf einer Bauplattform 3 innerhalb eines Baufelds 4 übereinanderliegenden Schichten aus beispielsweise pulverförmigem, zunächst losem Partikelmaterial ist in den Figuren 1a bis 1c bzw. 2a und 2b gezeigt. Das in Figuren 1a bis 1c gezeigte Baufeld 4 erstreckt sich flächig in Fig.1 in horizontaler X- und Y-Richtung parallel zur Bauplattform 3, wobei der Schichtenkörper 2 in vertikaler Z-Richtung aufgebaut wird.

Die Vorrichtung 1 umfasst eine über dem Baufeld 4 in wenigstens einer Austragrichtung, hier beispielsweise parallel zur X=Richtung hin und her bewegbare Austragvorrichtung mit einem Austragbehälter 5, welcher eine untere, in Fig.2a und Fig.2b sichtbare Austragöffnung 6 aufweist, aus welcher während der Bewegung der Austragvorrichtung bzw. des Austragbehälters 5 das Partikelmaterial in einzelnen übereinander liegenden Schichten austragbar ist. Der Austragbehälter 5 ist etwa mittig an einem sich zwischen zwei Linearführungen 9 erstreckenden Führungsbalken 19 befestigt und kann mit diesem zusammen entlang der Linearführungen in X-Richtung verfahren werden.

Der Austragbehälter 5 ist bevorzugt ein nicht schaltbarer Austragbehälter, d.h. ohne Möglichkeit, den Materialfluss durch die Austragöffnung ein- bzw. auszuschalten, damit fließfähiges Material bzw. Partikelmaterial ausfließen bzw. nicht ausfließen kann. Vielmehr fließt bei dem Austragbehälter 5 stets Partikelmaterial durch die Austragöffnung, wenn diese nicht durch nicht zum Austragbehälter 5 gehörende Mittel verschlossen wird oder wenn sich kein Partikelmaterial (mehr) in dem Austragbehälter 5 befindet.

Weiterhin umfasst die Vorrichtung 1 einen über dem Baufeld 4 beispielsweise in X- und Y-Richtung hin und her bewegbaren Druckkopf 7 zum selektiven Auftragen von Bindemittel oder von energiereicher Strahlung auf wenigstens eine ausgetragene Schicht, um in örtlich vorbestimmten Bereichen des Baufelds 4 ausgetragene Schichten durch Einwirkung von Bindemittel oder energiereicher Strahlung zu verfestigen und miteinander zu verbinden, so dass von den verfestigten und verbundenen Bereichen der Schichten des Schichtkörpers in bekannter Weise wenigstens der Schichtenkörper 2 gebildet wird.

Alternativ hierzu könnte der Druckkopf 7 auch durch eine Strahlungsquelle ersetzt werden, wenn in dem ausgetragenen fließfähigen Material bereits ein Bindemittel vorhanden ist, welches dann durch selektive Bestrahlung mittels der Strahlungsquelle aushärtet, um den Schichten- oder Formkörper 2 auszubilden.

Die Ausdehnung des Baufelds 4 in X-und Y-Richtung wird durch den Materialauftrag auf der Bauplattform 3 vorgegeben. Beschreibt man das Baufeld 4 in dem gezeigten orthogonalen Koordinatensystem X-Y-Z, lässt sich ausgehend vom Ursprung jede Ausdehnung oder Größe von Baufeld als Rechteck oder Quadrat darstellen. Die Abmessungen der Bauplattform 3 in X- und Y-Richtung entsprechen dann einer maximal darstellbaren Größe des Baufelds 4.

Generell wird die eine Rechteckseite eines solchen Baufelds 4 beispielsweise durch die Austragstrecke oder den Austragweg des Austragbehälters 5 in der in Fig.1a durch den Pfeil 8 gekennzeichneten Austragrichtung (X-Richtung) bestimmt, so dass im vorliegenden Fall die Baufeldgröße von der Länge dieser Austragstrecke abhängt. Die andere Rechteckseite eines Baufelds 4 wird beispielsweise durch die Länge der Austragöffnung 6 des Austragbehälters 5 in Y-richtung bestimmt, welche insbesondere durch einen länglichen Schlitz gebildet wird (siehe Fig.2a und Fig.2b).

Es können daher unterschiedliche Längen von Austragsöffnungen 6 bzw. Austragbehältern 5 vorgesehen werden, um die unterschiedlich langen Rechteckseiten von Baufeldern 4 in Y-Richtung zu erzeugen. Insgesamt kann daher im vorliegenden Fall mit einmaligem Zurücklegen der Austragstrecke in X-Richtung eine Schicht des Schichtenkörpers 2 komplett fertig gestellt werden.

Die Ränder des Baufelds 4 in X- und Y-Richtung können durch gedruckte Wandungen gebildet werden, d.h. dass das Partikelmaterial dort durch den Druckkopf 7 gezielt verfestigt wird, damit innerhalb der Ränder des Baufelds 4 befindliches loses Partikelmaterial des Schichtenkörpers 2 nicht in Bereiche außerhalb des Baufelds 4 abfließen kann. Hierzu bedruckt der Druckkopf 7 die Randbereiche jeder ausgebrachten Schicht in geeigneter Weise. Alternativ könnten aber auch ein separater Baubehälter bzw. separate Bauwände zur Begrenzung des Baufelds 4 eingesetzt werden.

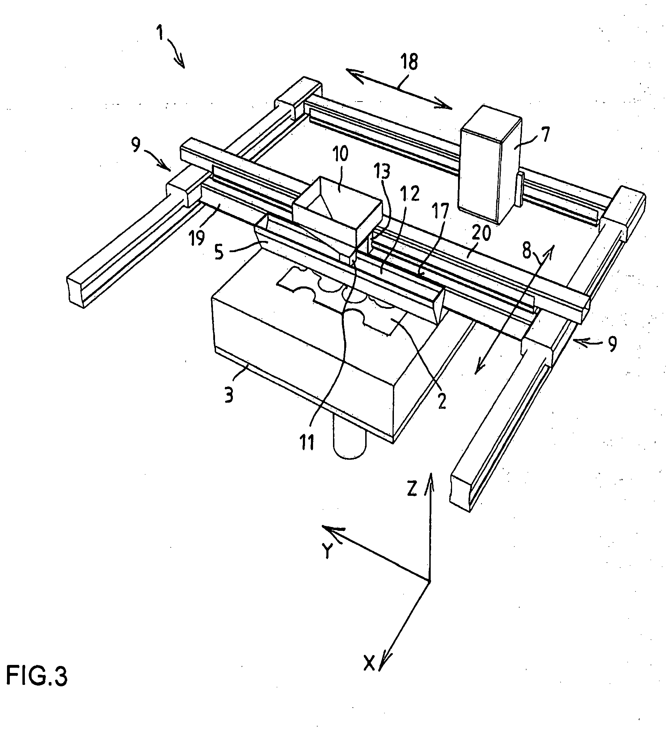

Bei der bevorzugten Ausführungsform wird mit fortschreitender Höhe des Schichtenkörpers 2 in Z-Richtung bevorzugt die Bauplattform 3 abgesenkt, insbesondere mittels in Fig.3 zeichnerisch angedeuteter Antriebe und Führungen. Deshalb verbleibt für jede neu auszubringende Schicht der Austragbehälter 5 auf seinem anfänglichen Niveau und ist deshalb beispielsweise lediglich in X-Richtung relativ zur Bauplattform 3 zusammen mit seinem Führungsbalken 19 entlang der Linearführungen 9 verfahrbar. Alternativ könnte die Bauplattform 3 stationär angeordnet sein und der Austragbehälter 5 sowohl in X-Richtung als auch in Z-Richtung relativ zur stationären Bauplattform 3 verfahrbar ausgebildet sein.

Wie bereits oben angedeutet, wird der Austragbehälter 5 hinsichtlich einer vorgegebenen, sich von einer Ausgangs-, Start- oder Ruheposition (siehe Figuren 1b und 1c) an einem Rand des Baufelds 4 bis zu einer Reversierposition am gegenüberliegenden Rand des Baufelds 4 erstreckenden Austragstrecke in X-Richtung beispielsweise von einem hier nicht gezeigten elektronischen Steuergerät weggesteuert, d.h. auf einen Startbefehl hin bewegt sich der Austragbehälter 5 von seiner Ausgangs- oder Ruheposition aus in X-Richtung zunächst bis zur Reversierposition, an welcher die Bewegungsrichtung, gegebenenfalls nach Ablauf einer gewissen Verweilzeit an der Reversierposition automatisch umgekehrt wird. Während der Bewegung des Austragbehälters 5 entlang der Austragstrecke, welche dann zugleich die Länge der hier sichtbaren Rechteckseite des Baufelds 4 bildet, wird dann über die Austragöffnung 6 bevorzugt kontinuierlich Partikelmaterial auf die Bauplattform 3 bzw. auf einen bereits aufgeschichteten Teil des Schichtenkörpers 2 aufgetragen. Fig.1a zeigt die Situation, in der der Austragbehälter 5 entlang seiner Austragstrecke in X-Richtung verfahren wird und sich zwischen seiner Ausgangsposition und seiner Reversierposition befindet.

Der Austragbehälter 5 ist von einem Vorrats- oder Befüllbehälter 10 mit einer Abfließöffnung 11 durch vertikale Überdeckung der Abfließöffnung 11 mit einer länglichen Zuführöffnung 12 des Austragbehälters 5 mit fließfähigem Material versorgbar. Bevorzugt erstreckt sich die Zuführöffnung 11 des Austragbehälters 5 im Wesentlichen über die gesamte Länge des Austragbehälters 5 (Y-Richtung), wenn man die Seitenwände des Austragbehälters 5 entsprechend dünn ausführt.

Bevorzugt in seiner Ausgangsposition (Fig.1b und Fig.1c) wird der Austragbehälter 5, der hier beispielsweise durch einen Austragtrichter 5 mit trichterförmigem Querschnitt in einer Ebene senkrecht zur Y-Achse gebildet wird (siehe Fig.2b) von dem Vorrats- oder Befüllbehälter 10 mit einer Menge an Partikelmaterial befüllt, welche vorzugsweise einem Vielfachen von aufzutragenden Schichten entspricht. Die Befüllung des Austragbehälters 5 durch den Vorrats- oder Befüllbehälter 10 ist in den Figuren 1b und 1c schrittweise gezeigt.

Wie aus den Figuren 1a bis 1c hervorgeht, weist in Längsrichtung des Austragbehälters 5 gesehen, d.h. in den Figuren in Y-Richtung oder senkrecht zur Austragrichtung (X-Richtung) der Vorrats- oder Befüllbehälter 10 eine hier beispielsweise wesentlich geringere Erstreckung als der Austragbehälter 5 auf. Bevorzugt ist der Austragbehälter 5 um ein Vielfaches der Länge (Y-Richtung) des Vorrats- oder Befüllbehälters 10 länger als der Vorrats- oder Befüllbehälter 10.

Weiterhin ist der Vorrats- oder Befüllbehälter 10 in Längsrichtung des Austragbehälters 5 gesehen (Y-Richtung) relativ zum Austragbehälter 5 derart steuerbar, dass die Abfließöffnung 11 des Vorrats- oder Befüllbehälters 10 entlang der Zuführöffnung 12 geführt wird und zwar wenigstens einmal von deren einem Ende bis zu deren anderem Ende. Diese Bewegung ist in Fig.1b durch den Pfeil 18 veranschaulicht.

Besonders bevorzugt ist der Vorrats- oder Befüllbehälter 10 entlang einer sich zwischen seiner Ausgangsposition (siehe Fig.1b) an dem einem Ende der Zuführöffnung 12 des Austragbehälters 5 und einer Reversierposition (siehe Fig.1c) am dem anderen Ende der Zuführöffnung 12 des Austragbehälters 5 erstreckenden Austragstrecke zwangsgesteuert. Bevorzugt ist die Ausgangsposition des Vorrats- oder Befüllbehälters 10 gemäß Fig.1b eine Befüllposition, an welcher der Vorrats- oder Befüllbehälter 10 mittels einer hier nicht gezeigten Befüllvorrichtung mit fließfähigem Material befüll- oder nachfüllbar ist.

Wie aus den Figuren la bis 2b hervorgeht, ist der Vorrats- oder Befüllbehälter 10 relativ zum Austragbehälter 5 entlang eines Führungsbalkens 20 durch eine Linearführung 13 geführt und wird mittels eines hier nicht gezeigten Antriebsmotors angetrieben. Die Drehbewegung des Antriebsmotors wird über ein Getriebe, beispielsweise einen Mutter-Spindeltrieb in eine Linearbewegung des Vorrats- oder Befüllbehälters 10 gewandelt. Die Steuerung des Antriebsmotors erfolgt beispielsweise durch ein elektronisches Steuergerät, welches beispielsweise ebenfalls den Austragbehälter 5 entlang seiner Austragstrecke steuert. Der Führungsbalken 20 ist bei dieser Ausführungsform stationär an einem Ende der Vorrichtung 1 angeordnet, während der Vorrats- und Befüllbehälter 10 am Führungsbalken 20 mittels der Linearführung 13 linear geführt ist.

Aus Fig.2a und Fig.2 b geht hervor, dass die Abfließöffnung 11 des Vorrats- oder Befüllbehälters 10 auf einem Niveau angeordnet ist, welches im Wesentlichen auf einem für das fließfähige Material in dem Austragbehälter zu erzielenden Füllniveau 14 liegt, um an der aktuellen Position der Abfließöffnung 11 an der Austragstrecke diese Abfließöffnung 11 bei Erreichen des zu erzielenden Füllniveaus 14 durch das bereits im Rahmen eines bereits zurückgelegten Abschnitts des Austragstrecke in den Austragbehälter 5 eingebrachte fließfähige Material zu verschließen. Damit wird eine sog. "Schüttkegeldichtung" realisiert, bei welcher ein durch die Abfließöffnung 11 ausgebrachter Schüttkegel 15 des bereits in den Austragbehälter 5 ausgebrachten fließfähigen Materials durch Rückstau ein weiteres Abfließen an der bisherigen Position der Austragstrecke verhindert und erst bei Weiterfahrt des Vorrats- und Befüllbehälters 10 weiteres fließfähiges Material ausfließen kann, bis wiederum der Schüttkegel 15 an dieser dann erreichten Position das Abfließen behindert.

Um Verlust von fließfähigem Material zu vermeiden, wenn der Vorrats-oder Befüllbehälter 10 die Reversierposition (Fig.1c) erreicht bzw. geringfügig überschritten hat, und dann die Gefahr besteht, dass sich die Abfließöffnung 11 des Vorrats- und Befüllbehälters 10 nicht mehr (vollständig) über der Zuführöffnung 12 des Austragbehälters 5 befindet, kann im Bereich der Reversierposition (Fig.1c) des Vorrats-oder Befüllbehälters 10 bzw. etwas ein Stück weit darüber hinaus ein Verschlusskörper 16 derart angeordnet sein, dass bei Positionierung der Abfließöffnung 11 des Vorrats- oder Befüllbehälters 10 über dem Verschlusskörper 16 der Verschlusskörper 16 die Abfließöffnung 11 verschließt.

Der Verschlusskörper 16 ist bevorzugt ein flächiger plattenförmiger Körper, beispielsweise ein Blech mit oder ohne Durchgangsöffnung, je nachdem ob er einen Austrag aus der Abfließöffnung des Vorrats- und Befüllbehälters 10 verhindern oder einen Austrag In einen hier nicht dargestellten, unterhalb des Verschlusskörpers 16 angeordneten Auffangbehälter bewirken soll.

Wenn sich der Vorrats- und Befüllbehälter 10 an der Reversierposition (Fig.1c) mit seiner Abfließöffnung 11 genau oberhalb des Verschlusskörpers 16 befindet, wird die Abfließöffnung 11 durch den Verschlusskörper 16 verschlossen, wie anhand von Fig.2a leicht vorstellbar ist.

Besonders bevorzugt ist der gegenüber dem Austragbehälter 5 längsverfahrbare Vorrats- oder Befüllbehälter 10 derart befüllbar, dimensioniert und/oder gesteuert, dass der Austragbehälter 5 aufgrund einer einzigen Hinfahrt des Vorrats- oder Befüllbehälters 10 von seiner Ausgangsposition (Fig.1b) bis zu seiner Reversierposition (Fig.1c) auf das zu erzielende Füllniveau 14 befüllbar ist. Alternativ kann hierzu auch eine einzige Hin- und Rückfahrt des Vorrats- oder Befüllbehälters 10 von seiner Ausgangsposition (Fig.1b) bis zu seiner Reversierposition (Fig.1c) und zurück oder auch mehrere Fahrten entlang der Austragstrecke notwendig sein.

Gemäß der Ausführungsform von Fig.2 und 2b ist in Austragrichtung oder in Längsrichtung des Austragbehälters 5 gesehen der Vorrats-oder Befüllbehälter 10 stationär angeordnet und der Austragbehälter 5 unter den Vorrats- oder Befüllbehälter 10 verfahrbar, wie in den Figuren 1a bis 1c gezeigt ist.

Bei der in Fig.3 gezeigten Ausführungsform sind gegenüber der vorangehend beschriebenen Ausführungsform identische oder ähnlich wirkende Bauteile und Baugruppen mit denselben Bezugszeichen gekennzeichnet. Im Unterschied zum vorangehenden Ausführungsbeispiel ist in Austragrichtung 8 des Austragbehälters 5 gesehen der Vorrats- oder Befüllbehälter 10 zusammen mit dem Austragbehälter 5 verfahrbar. Dies ist beispielsweise dadurch realisiert, dass der Führungsbalken 20 mit der Linearführung 13, der Antriebsmotor sowie das Getriebe für den Vorrats- oder Befüllbehälter 10 an dem durch die Linearführungen 9 geführten Führungsbalken 19 für den Austragbehälter 5 angeordnet sind und daher zusammen mit diesem Führungsbalken 19 in Austragrichtung 8 mit verfahren werden können. Weiterhin ist der Vorrats- oder Befüllbehälter 10 durch die Linearführung 13 gegenüber dem Führungsbalken 20 in Y-Richtung oder in Richtung des Pfeils 18, also senkrecht zur Austragrichtung 8 verfahrbar.

In diesem Fall ist der Vorrats- oder Befüllbehälter 10 in vertikaler Richtung gesehen relativ zum Austragbehälter 5 bevorzugt derart positioniert, dass das Niveau der Abfließöffnung 11 des Vorrats- oder Befüllbehälters 10 unterhalb des Niveaus eines oberen Randes 17 der Zuführöffnung 12 des Austragbehälters 5 angeordnet ist. Dann wird ein Abfließen von Schüttmaterial nach außerhalb des Auftragbehälters 5 bzw. auf dessen Rand 17 wirksam verhindert.

Beispielsweise kann der Vorrats- oder Befüllbehälter 10 einen trichterförmigen Querschnitt aufweisen, wobei die Abfließöffnung 11 trichterendseitig angeordnet ist. Besonders bevorzugt ist der Querschnitt des Vorrats- und Befüllbehälters 10 sowohl in einer Ebene senkrecht zur Längserstreckung des Auftragbehälters 5 (Y-Richtung) als auch in einer Ebene, welche die Längsachse des Auftragbehälters 5 enthält und vertikal ausgerichtet ist, trichterförmig ausgebildet.

Weiterhin kann der Querschnitt des Vorrats- oder Befüllbehälters 10 in einer horizontalen Ebene quadratisch oder rechteckförmig ausgebildet sein, wobei bei rechteckförmigem Querschnitt die längere Seite parallel zum Austragbehälter 5 angeordnet, aber eben kürzer als dieser ausgebildet ist. Dies wird insbesondere durch Fig.2a und Fig.2b veranschaulicht.

Das Abfließen von fließfähigem Material aus dem Vorrats- oder Befüllbehälter 10 in den Austragbehälter kann bevorzugt durch wenigstens eine der folgenden, hier nicht gezeigten Einrichtungen, einzeln oder in Kombination miteinander erfolgen:
- Eine Einrichtung zum Erzeugen von Druck und/oder Schwingungen in dem im Vorrats- oder Befüllbehälter bevorrateten fließfähigen Material, um durch Einbringen von Druck und/oder Schwingungen das fließfähige Material von einem nicht fließenden Zustand in einen fließenden Zustand zu bringen, in welchem es durch die Abfließöffnung abfließen kann,
- eine Einrichtung zum wahlweisen Öffnen oder Verschließen der wenigstens einen Abfließöffnung des Vorrats- oder Befüllbehälters,
- eine Einrichtung zum Aktivieren und Deaktivieren eines auf das in dem in dem Vorrats- oder Befüllbehälter bevorratete fließfähige Material wirkenden Sogs, derart, dass
   o bei aktiviertem Sog das fließfähige Material einerseits durch eine sieb- oder gewebeartige Struktur einerseits am Abfließen in Richtung des Sogs und andererseits auch am Abfließen durch die wenigstens eine Abfließöffnung gehindert ist,
   o bei deaktiviertem Sog das in dem Vorrats- oder Befüllbehälter bevorratete fließfähige Material durch die Abfließöffnung abfließt,
- eine Zellradschleuseneinrichtung.

In vorteilhafter Weise ist an dem gegenüber dem Austragbehälter 5 verfahrbaren Vorrats- oder Befüllbehälter 10 eine hier nicht gezeigte Reinigungsvorrichtung für die Unterseite bzw. für die Austragöffnung 6 des Austragbehälters 5 befestigt. Dann verfährt die Reinigungsvorrichtung zusammen mit dem Vorrats- und Befüllbehälter 10 als Baueinheit.

Anstatt nur eine Abfließöffnung 11 kann der Vorrats- und Befüllbehälter 10 auch mehrere solcher Abfließöffnungen 11 aufweisen.

### Bezugszeichenliste

- 1: Vorrichtung
- 2: Schichtenkörper
- 3: Bauplattform
- 4: Baufeld
- 5: Austragbehälter
- 6: Austragöffnung
- 7: Druckkopf
- 8: Pfeil
- 9: Linearführung
- 10: Vorrats- und Befüllbehälter
- 11: Abfließöffnung
- 12: Zuführöffnung
- 13: Linearführung
- 14: Füllniveau
- 15: Schüttkegel
- 16: Verschlusskörper
- 17: oberer Rand
- 18: Pfeil
- 19: Führungsbalken
- 20: Führungsbalken

## Patentansprüche

1. Vorrichtung (1) zum Aufbauen eines Schichtenkörpers (2) aus einer Mehrzahl von auf einer Bauplattform (3) innerhalb eines Baufelds (4) übereinanderliegenden Schichten aus fließfähigem Material, besondere aus Partikelmaterial, die in örtlich vorbestimmten Bereichen verfestigt und miteinander verbunden sind, so dass von den verfestigten und verbundenen Bereichen der Schichten wenigstens ein Schichtenkörper (2) gebildet wird, beinhaltend einen über dem Baufeld (11) in wenigstens einer Austragrichtung hin und her bewegbaren, länglichen Austragbehälter (5) mit wenigstens einer Austragöffnung (6), aus welcher während der Bewegung des Austragbehälters (5) das fließfähige Material in einzelnen übereinander liegenden Schichten austragbar ist, wobei der Austragbehälter (5) von einer wenigstens einen Vorrats- oder Befüllbehälter (10) mit wenigstens einer Abfließöffnung (11) aufweisenden Befülleinrichtung durch vertikale Überdeckung der wenigstens einen Abfließöffnung (11) des Vorrats- oder Befüllbehälters (10) mit einer länglichen Zuführöffnung (12) des Austragbehälters (5) mit fließfähigem Material versorgbar ist, wobei in Längsrichtung des Austragbehälters (5) gesehen der Vorrats- oder Befüllbehälter (10) eine geringere Erstreckung als der Austragbehälter (5) aufweist, **dadurch gekennzeichnet, dass** der Vorrats- oder Befüllbehälter (10) in Längsrichtung des Austragbehälters (5) gesehen relativ zum Austragbehälter (5) derart steuerbar ist, dass die Abfließöffnung (11) des Vorrats- oder Befüllbehälters (10) entlang der Zuführöffnung (12), wenigstens einmal von deren einem Ende bis zu deren anderem Ende geführt wird.

2. Vorrichtung nach Anspruch 1, **dadurch gekennzeichnet, dass** der Vorrats- oder Befüllbehälter (10) entlang einer sich zwischen einer Ausgangsposition an dem einem Ende der Zuführöffnung (12) des Austragbehälters (5) und einer Reversierposition am dem anderen Ende der Zuführöffnung (12) des Austragbehälters (5) erstreckenden Austragstrecke gesteuert ist.

3. Vorrichtung nach Anspruch 2, **dadurch gekennzeichnet, dass** die wenigstens eine Abfließöffnung (11) des Vorrats- oder Befüllbehälters (10) auf einem Niveau angeordnet ist, weiches im Wesentlichen auf einem für das fließfähige Material in dem Austragbehälter zu erzielenden Füllniveau (14) liegt, um an der aktuellen Position der wenigstens einen Abfließöffnung (11) an der Austragstrecke diese wenigstens eine Abfließöffnung (11) bei Erreichen des zu erzielenden Füllniveaus (14) durch das bereits im Rahmen eines bereits zurückgelegten Abschnitts der Austragstrecke in den Austragbehälter (5) eingebrachte fließfähige Material zu verschließen.

4. Vorrichtung nach Anspruch 2 oder 3, **dadurch gekennzeichnet, dass** die Ausgangsposition des Vorrats- oder Befüllbehälters (10) eine Befüllposition ist, an welcher der Vorrats- oder Befüllbehälter (10) mittels einer Befüllvorrichtung mit fließfähigem Material befüll- oder nachfüllbar ist.

5. Vorrichtung nach einem der Ansprüche 2 bis 4, **dadurch gekennzeichnet, dass** im Bereich der Reversierposition des Vorrats- oder Befüllbehälters (10) ein Verschlusskörper (16) derart angeordnet ist, dass bei Positionierung der wenigstens einen Abfließöffnung (11) des Vorrats- oder Befüllbehälters (10) über dem Verschlusskörper (16) der Verschlusskörper (16) die Abfließöffnung verschließt, um an der Reversierposition einen Abfluss von fließfähigem Material aus dem Vorrats- oder Befüllbehälter (10) an der Zuführöffnung (12) des Austragbehälters (5) vorbei zu verhindern.

6. Vorrichtung nach einem der Ansprüche 2 bis 5, **dadurch gekennzeichnet, dass** der gegenüber dem Austragbehälter (5) verfahrbare Vorrats- oder Befüllbehälter (10) derart befüllt, dimensioniert und/oder gesteuert ist, dass der Austragbehälter (5) aufgrund einer einzigen Hinfahrt von der Ausgangsposition bis zur Reversierposition, aufgrund einer einzigen Hin- und Rückfahrt von der Ausgangsposition bis zur Reversierposition und zurück oder aufgrund mehrerer Fahrten entlang der Austragstrecke bis auf ein zu erzielendes Füllniveau (14) befüllbar ist.

7. Vorrichtung nach einem der vorhergehenden Ansprüche, **dadurch gekennzeichnet, dass** sich die Zuführöffnung (12) des Austragbehälters (5) im Wesentlichen über die gesamte Länge des Austragbehälters (5) erstreckt.

8. Vorrichtung nach einem der vorhergehenden Ansprüche, **dadurch gekennzeichnet, dass** in Austragrichtung des Austragbehälters (5) gesehen der Vorrats- oder Befüllbehälter (10) stationär angeordnet und der Austragbehälter (5) unter den Vorrats- oder Befüllbehälter (10) verfahrbar ist.

9. Vorrichtung nach einem der Ansprüche 1 bis 7, **dadurch gekennzeichnet, dass** in Austragrichtung des Austragbehälters (5) gesehen der Vorrats- oder Befüllbehälter (10) zusammen mit dem Austragbehälter (5) verfahrbar ist.

10. Vorrichtung nach Anspruch 9, **dadurch gekennzeichnet, dass** der Vorrats- oder Befüllbehälter (10) in vertikaler Richtung gesehen relativ zum Austragbehälter (5) derart positioniert ist, dass das Niveau der wenigstens einen Abfließöffnung (11) des Vorrats- oder Befüllbehälters (10) unterhalb des Niveaus eines oberen Rands (17) der Zuführöffnung (12) des Austragbehälters (5) angeordnet ist.

11. Vorrichtung nach einem der vorhergehenden Ansprüche, **dadurch gekennzeichnet, dass** der Vorrats- oder Befüllbehälter (10) einen trichterförmigen Querschnitt aufweist, wobei die wenigstens eine Abfließöffnung (11) trichterendseitig angeordnet ist.

12. Vorrichtung nach einem der vorhergehenden Ansprüche, **dadurch gekennzeichnet, dass** das Abfließen von fließfähigem Material aus dem Vorrats- oder Befüllbehälter (10) in den Austragbehälter (5) durch wenigstens eine der folgenden Einrichtungen, einzeln oder in Kombination miteinander erfolgt:
a) Eine Einrichtung zum Erzeugen von Druck und/oder Schwingungen in dem im Vorrats- oder Befüllbehälter bevorrateten fließfähigen Material, um durch Einbringen von Druck und/oder Schwingungen das fließfähige Material von einem nicht fließenden Zustand in einen fließenden Zustand zu bringen, in welchem es durch die wenigstens eine Abfließöffnung abfließen kann,
b) eine Einrichtung zum wahlweisen Öffnen oder Verschließen der wenigstens einen Abfließöffnung des Vorrats- oder Befüllbehälters,
c) eine Einrichtung zum Aktivieren und Deaktivieren eines auf das in dem in dem Vorrats- oder Befüllbehälter bevorratete fließfähige Material wirkenden Sogs, derart, dass
c1) bei aktiviertem Sog das fließfähige Material einerseits durch eine sieb- oder gewebeartige Struktur einerseits am Abfließen in Richtung des Sogs und andererseits auch am Abfließen durch die wenigstens eine Abfließöffnung gehindert ist,
c2) bei deaktiviertem Sog das in dem Vorrats- oder Befüllbehälter bevorratete fließfähige Material durch die wenigstens eine Abfließöffnung abfließt,
d) eine Zellradschleuseneinrichtung.

13. Vorrichtung nach einem der vorhergehenden Ansprüche, **dadurch gekennzeichnet, dass** der Vorrats- oder Befüllbehälter (10) relativ zum Aüstragbehälter (5) entlang einer Linearführung (13) geführt und durch Antriebsmittel angetrieben ist.

14. Vorrichtung nach einem der vorhergehenden Ansprüche, **dadurch gekennzeichnet, dass** an dem gegenüber dem Austragbehälter (5) verfahrbaren Vorrats- oder Befüllbehälter (10) eine Reinigungsvorrichtung für die Austragöffnung des Austragbehälters befestigt ist.

## Claims

1. A device (1) for constructing a layered element (2) from a plurality of layers that are arranged on top of one another on a construction platform (3) within a construction field (4) and that are made from a flowable material, in particular a particle material and which layers are solidified and connected with one another in locally predetermined portions, so that at least one layered element (2) is formed from solidified and connected portions of the layers, the device comprising an elongated dispensing container (5) that is moveable back and forth above the construction field (11) in at least one dispensing direction, wherein the dispensing container includes at least one output opening (6) from which the flowable material is dispensable in individual layers that are arranged on top of each other during a movement of the dispensing container (5), wherein the dispensing container (5) is supplyable with the flowable material by a filling device including at least one storage or filling container (10) with at least one outflow opening (11) through a vertical overlap of the at least one outflow opening (11) of the storage or filling container (10) with an elongated supply opening (12) of the dispensing container (5), wherein the storage or filling container (10) has a lower extension than the dispensing container (5) viewed in a longitudinal direction of the dispensing container (5), **characterized in that** the storage or filling container (10) is controllable relative to the dispensing container (5) in a longitudinal direction of the dispensing container (5) so that the outflow opening (11) of the storage or filling container (10) is moved along the supply opening (12) at least once from one end of the supply opening to another end of the supply opening.

2. The device according to claim 1, **characterized in that** the storage or filling container (10) is controlled along a dispensing path extending between a starting position at one end of the supply opening (12) of the dispensing container (5) and a reversing position at another end of the supply opening (12) of the dispensing container (5).

3. The device according to claim 2, **characterized in that** the at least one outflow opening (11) of the storage or filling container (10) is arranged at a level which is essentially at a nominal filling level (14) of the flowable material in the dispensing container in order to close the at least one outflow opening (11) at a current position of the at least one outflow opening (11) on the dispensing path when reaching the nominal filling level (14) through a flow able material that is already introduced into the dispensing container (5) along a section of the dispensing path that has already been travelled.

4. The device according to claim 2 or 3, **characterized in that** a starting position of the storage or filling container (10) is a filling position where the storage or filling container (10) is fillable or refillable with the flowable material by a filling device.

5. The device according to one of the claims 2 - 4, **characterized in that** a closing element (16) is arranged in a portion of the reversing position of the storage or filling container (10) so that the closing element (16) closes the at least one outflow opening (11) of the storage or filling container (10) when the at least one outflow opening (11) of the storage or filling container (10) is positioned above the closing element (16) so that the an outflow of the flow able material from the storage or filling container (10) past the feed opening (12) of the dispensing container (5) is prevented at the reversing position.

6. The device according to one of the claims 2 through 5, **characterized in that** the storage or filling container (10) that is movable relative to the dispensing container (5) is filled, sized and/or controlled so that the dispensing container (5) is fillable up to the nominal filling level (14) by a single forward travel from the starting position to the reversing position, by a single forward travel and reverse travel from the starting position to the reversing position and back or by plural travels along the dispensing path.

7. The device according to one of the preceding claims, **characterized in that** the feed opening (12) of the dispensing container (5) extends essentially over an entire length of the dispensing container (5).

8. The device according to one of the preceding claims, **characterized in that** the storage or filling container (10) is arranged stationary in a dispensing direction of the dispensing container (5) and the dispensing container (5) is movable to a position under the storage or filling container (10).

9. The device to one of the claims 1 through 7, **characterized in that** the storage or filling container (10) is moveable together with the dispensing container (5) in a dispensing direction of the dispensing container (5).

10. The device according to claim 9, **characterized in that** the storage or filling container (10) is positioned in a vertical direction relative to the dispensing container (5) so that the a level of the at least one drain opening (11) of the storage or filling container (10) is arranged below a level of an upper edge (17) of the feed opening (12) of the dispensing container (5).

11. The device according to one of the preceding claims, **characterized in that** the storage or filling container (10) has a funnel shaped cross section, wherein the at least one outflow opening (11) is arranged at an end of the funnel.

12. The device according to one of the preceding claims, **characterized in that** an outflow of the flowable material from the storage or filling container (10) into the dispensing container (5) is provided by at least one of the following devices individually or in combination with one another:
a) a device for generating pressure and/or vibrations in the flowable material stored in the storage or filling container in order to transform the flowable material from a non flowing condition into a flowing condition by introducing the pressure and/or the vibrations wherein the flowable material is capable to flow through the at least one outlet opening in the flowing condition,
b) a device for optionally opening or closing the at least one outlet opening of the storage or filling container,
c) a device for activating and deactivating a suction impacting the flowable material that is stored in the storage or filling container, so that
c1) with the suction deactivated the flowable material is prevented by a sieve or fabric structure from flowing towards the suction and also prevented from flowing through the at least one outlet opening,
c2) with the suction deactivated the flowable material stored in the storage or filling container flows out through the at least one outlet opening,
d) a rotary star valve.

13. The device according to one of the preceding claims, **characterized in that** the storage or filling container (10) is supported relative to the dispensing container (5) along a linear guide (13) and driven by drive devices.

14. The device according to one of the preceding claims, **characterized in that** a cleaning device for the outflow opening of the dispensing container is attached at the storage or filling container (10) that is movable relative to the dispensing container (5).

## Revendications

1. Dispositif (1) pour construire un corps stratifié (2) composé d'une multitude de couches en matériau fluide, en particulier en matériau en particules, superposées sur une plateforme de construction (3) à l'intérieur d'un champ de construction (4), qui sont solidifiées dans des zones prédéterminées localement et qui sont reliées l'une à l'autre si bien qu'au moins un corps stratifié (2) est formé par les zones solidifiées et reliées des couches, contentant un conteneur de déchargement allongé (5), mobile en va-et-vient au-dessus du champ de construction (11) dans au moins un sens de déchargement, avec au moins une ouverture de déchargement (6) par laquelle le matériau fluide peut être déchargé en différentes couches superposées pendant le déplacement du conteneur de déchargement (5), cependant que le conteneur de déchargement (5) peut être alimenté en matériau fluide par un dispositif de remplissage, qui présente au moins un conteneur de stockage ou de remplissage (10) avec au moins une ouverture d'écoulement (11), par recouvrement vertical de l'ouverture d'écoulement qui existe au moins (11) du conteneur de stockage ou de remplissage (10) avec une ouverture d'alimentation allongée (12) du conteneur de déchargement (5), cependant que le conteneur de stockage ou de remplissage (10) présente une plus petite extension que le conteneur de déchargement (5), ceci étant vu dans le sens longitudinal du conteneur de déchargement (5), **caractérisé en ce que** le conteneur de stockage ou de remplissage (10) peut être commandé dans le sens longitudinal du conteneur de déchargement (5), ceci étant vu par rapport au conteneur de déchargement (5), de telle manière que l'ouverture d'écoulement (11) du conteneur de stockage ou de remplissage (10) est guidée le long de l'ouverture d'alimentation (12) au moins une fois d'une de ses extrémités à l'autre extrémité.

2. Dispositif selon la revendication 1, **caractérisé en ce que** le conteneur de stockage ou de remplissage (10) est commandé le long d'une trajectoire de déchargement qui s'étend entre une position de départ à l'une des extrémités de l'ouverture d'alimentation (12) du conteneur de déchargement (5) et une position d'inversion à l'autre extrémité de l'ouverture d'alimentation (12) du conteneur de déchargement (5).

3. Dispositif selon la revendication 2, **caractérisé en ce que** l'ouverture d'écoulement qui existe au moins (11) du conteneur de stockage ou de remplissage (10) est placée à un niveau qui se situe sensiblement à un niveau de remplissage (14) qui doit être atteint pour le matériau fluide dans le conteneur de déchargement pour fermer cette ouverture d'écoulement qui existe au moins (11) à la position actuelle de l'ouverture d'écoulement qui existe au moins (11) sur la trajectoire de déchargement, lorsque le niveau de remplissage (14) qui doit être atteint est atteint, par le matériau fluide déjà introduit dans le conteneur de déchargement (5) dans le cadre d'une section déjà parcourue de la trajectoire de déchargement.

4. Dispositif selon la revendication 2 ou 3, **caractérisé en ce que** la position de départ du conteneur de stockage ou de remplissage (10) est une position de remplissage à laquelle le conteneur de stockage ou de remplissage (10) peut être rempli ou rechargé avec du matériau fluide au moyen d'un dispositif de remplissage.

5. Dispositif selon l'une des revendications 2 à 4, **caractérisé en ce qu'**un corps de fermeture (16) est placé dans la zone de la position d'inversion du conteneur de stockage ou de remplissage (10) de telle manière que, lors du positionnement de l'ouverture d'écoulement qui existe au moins (11) du conteneur de stockage ou de remplissage (10) au-dessus du corps de fermeture (16), le corps de fermeture (16) ferme l'ouverture d'écoulement pour empêcher, à la position d'inversion, un écoulement de matériau fluide hors du conteneur de stockage ou de remplissage (10) en passant devant l'ouverture d'alimentation (12) du conteneur de déchargement (5).

6. Dispositif selon l'une des revendications 2 à 5, **caractérisé en ce que** le conteneur de stockage ou de remplissage (10) déplaçable en face du conteneur de déchargement (5) est rempli, dimensionné et/ou commandé de telle manière que le conteneur de déchargement (5) peut être rempli jusqu'à un niveau de remplissage à atteindre (14) en raison d'un seul aller de la position de départ à la position d'inversion, en raison d'un seul aller et retour de la position de départ à la position d'inversion et retour ou en raison de plusieurs courses le long de la trajectoire de déchargement.

7. Dispositif selon l'une des revendications précédentes, **caractérisé en ce que** l'ouverture d'alimentation (12) du conteneur de déchargement (5) s'étend sensiblement au-dessus de la longueur totale du conteneur de déchargement (5).

8. Dispositif selon l'une des revendications précédentes, **caractérisé en ce que** le conteneur de stockage ou de remplissage (10) est placé stationnaire, ceci étant vu dans le sens de déchargement du conteneur de déchargement (5), et le conteneur de déchargement (5) est déplaçable sous le conteneur de stockage ou de remplissage (10).

9. Dispositif selon l'une des revendications 1 à 7, **caractérisé en ce que** le conteneur de stockage ou de remplissage (10) est déplaçable ensemble avec le conteneur de déchargement (5), ceci étant vu dans le sens de déchargement du conteneur de déchargement (5).

10. Dispositif selon la revendication 9, **caractérisé en ce que** le conteneur de stockage ou de remplissage (10) est positionné dans le sens vertical, ceci étant vu par rapport au conteneur de déchargement (5), de telle manière que le niveau de l'ouverture d'écoulement qui existe au moins (11) du conteneur de stockage ou de remplissage (10) est placé en dessous du niveau d'un bord supérieur (17) de l'ouverture d'alimentation (12) du conteneur de déchargement (5).

11. Dispositif selon l'une des revendications précédentes, **caractérisé en ce que** le conteneur de stockage ou de remplissage (10) présente une section transversale en forme d'entonnoir, cependant que l'ouverture d'écoulement qui existe au moins (11) est placée du côté de l'extrémité de l'entonnoir.

12. Dispositif selon l'une des revendications précédentes, **caractérisé en ce que** l'écoulement de matériau fluide hors du conteneur de stockage ou de remplissage (10) dans le conteneur de déchargement (5) se fait par au moins l'un des dispositifs suivants, individuellement ou en combinaison l'un avec l'autre :
a) un dispositif pour produire de la pression et/ou des oscillations dans le matériau fluide stocké dans le conteneur de stockage ou de remplissage pour amener, en appliquant de la pression et/ou des oscillations, le matériau fluide d'un état non fluide à un état fluide dans lequel il peut s'écouler par l'ouverture d'écoulement qui existe au moins,
b) un dispositif pour ouvrir ou fermer sélectivement l'ouverture d'écoulement qui existe au moins (11) du conteneur de stockage ou de remplissage (10),
c) un dispositif pour activer et désactiver une aspiration qui agit sur le matériau fluide stocké dans le conteneur de stockage ou de remplissage de telle manière que
c1) lorsque l'aspiration est activée, le matériau fluide est empêché d'une part par une structure de type tamis ou tissu d'une part de s'écouler en direction de l'aspiration et d'autre part aussi de s'écouler par l'ouverture d'écoulement qui existe au moins,
c2) lorsque l'aspiration est désactivée, le matériau fluide stocké dans le conteneur de stockage ou de remplissage s'écoule par l'ouverture d'écoulement qui existe au moins,
d) un dispositif de sas rotatif.

13. Dispositif selon l'une des revendications précédentes, **caractérisé en ce que** le conteneur de stockage ou de remplissage (10) est guidé par rapport au conteneur de déchargement (5) le long d'un guidage linéaire et est entraîné par des moyens d'entraînement.

14. Dispositif selon l'une des revendications précédentes, **caractérisé en ce qu'**un dispositif de nettoyage pour l'ouverture de déchargement du conteneur de déchargement est fixé sur le conteneur de stockage ou de remplissage (10) déplaçable en face du conteneur de déchargement (5).
